# FASCICULE DE BREVET EUROPEEN

(11) **EP 0 455 090 B1**
(45) Date de publication et mention de la délivrance du brevet: **15.02.1995**
(21) Numéro de dépôt: 91106456.6
(22) Date de dépôt: 22.04.1991
(51) Int. Cl.: G02B 6/30

(54) **Composant d'optique intégrée et procédé de fabrication**
Integriert optische Komponente und Verfahren ihrer Herstellung
Integrated-optic component and method of its fabrication

(30) Priorité: 27.04.1990 FR 9005408
(43) Date de publication de la demande: 06.11.1991
(73) Titulaire: ALCATEL FIBRES OPTIQUES, F-95871 Bezons Cedex (FR)
(72) Inventeur: Hakoun, Roland, F-95330 Domont (FR); Tanguy, Eric, F-75015 Paris (FR)
(74) Mandataire: Weinmiller, Jürgen

(56) Documents cités:
- EP-A- 0 283 203
- PATENT ABSTRACTS OF JAPAN, vol. 9, no. 262 (P-398)[1985], 19 octobre 1985 & JP-A-60 111 203
- INTERNATIONAL CONFERENCE ON INTEGRATED OPTICS AND OPTICAL FIBRE COMMUNICATION,11th EUROPEAN CONFERENCE ON OPTICAL COMMUNICATION, Venezia, 1-4 octobre 1985,pages 187-190; P. BARLIER et al.: "Passive integrated optics components for fiber optics communication in moldable glass"
- PATENT ABSTRACTS OF JAPAN, vol. 10, no. 215 (P-482)[2276], 31 juillet 1986 & JP-A-61 55 616

## Description

La présente invention porte sur un composant d'optique intégrée et son procédé de fabrication.

De manière connue, la technique dite d'optique intégrée permet la création de guides d'ondes dans un substrat diélectrique, en général en verre, par augmentation locale de l'indice de réfraction du verre. Elle utilise des procédés de diffusion d'ions ou des procédés de dépôts de couches convenables sur le substrat.

Ces composants d'optique intégrée sont de plus en plus utilisés dans les domaines de transmission utilisant des fibres optiques. L'un des problèmes rencontrés dans la production industrielle de ces composants d'optique intégrée, tels que coupleurs notamment, porte sur l'alignement de très grande précision des fibres optiques par rapport aux guides d'ondes créés dans le substrat. Cette précision d'alignement est de l'ordre du micromètre et parfois moins. Elle s'avère délicate à atteindre, du fait du manque de tenue mécanique des fibres optiques.

Pour répondre à ce problème, on connaît par le document FR-A 2612 301 un composant d'optique intégrée dont le substrat en verre comprend une partie centrale dans laquelle sont crées les guides d'ondes et dont les deux parties latérales de part et d'autre de cette partie centrale ont des rainures de positionement de fibres et des rainures de dégagement de fibres. Le substrat avec ses rainures de positionnement de fibres est issu de moulage de précision. Les guides d'ondes sont réalisés dans la partie centrale du substrat, en alignant leurs extrémités avec les rainures de positionnement de fibres déjà existantes sur le substrat. Les rainures de dégagement de fibres sont réalisées transversalement aux rainures de positionnement et aux guides, de préférence après formation des guides, par usinage mécanique. Elle sont de part et d'autre de la partie centrale en étant adjacentes aux extrémités des guides pour définir avec cette partie centrale, de chaque côté d'elle, un épaulement d'interface de raccordement les fibres aux guides d'ondes.

Les rainures de positionnement permettent l'alignement approximatif des fibres dénudées qu'elles reçoivent individuellement avec les extrémités des guides d'ondes et la mise en contact sensiblement des bouts des fibres contre l'épaulement d'interface correspondant. Les fibres étant ainsi positionnées, elles sont maintenues dans leurs rainures de positionnement et scellées au substrat à l'aide de colle alors que leurs extrémités au niveau des rainures de dégagement restent libres.

Les rainures de dégagement permettent alors d'obtenir l'alignement précis final des fibres avec les guides d'ondes, avant scellement des bouts des fibres contre leur épaulement d'interface. Cet alignement précis final est assuré à l'aide d'un micromanipulateur dont l'élément de préhension peut saisir les extrémités libres des fibres dans l'espace ménagé par chaque rainure de dégagement. Ce réglage final vient compenser le manque de précision suffisante d'alignement, difficile à obtenir, des guides d'ondes avec les rainures de positionnement issues de moulage du substrat.

Dans ce composant d'optique intégrée, les rainures de dégagement, prévues pour laisser libres les extrémités des fibres et pour leur micromanipulation de réglage final, ne permettent par contre pas une bonne tenue mécanique des fibres, une fois l'alignement obtenu et le scellement final de leurs extrémités réalisé. Ce scellement final devient fragile : il rend délicat le retrait du micromanipulateur en prise sur les extrémités des fibres et reste très sensible aux conditions environnantes et ceci d'autant plus que le réglage final par le micromanipulateur a été relativement important.

La présente invention a pour but d'éviter ces inconvénients.

Elle a pour objet un composant d'optique intégrée présentant un substrat longitudinal en verre comportant des guides d'ondes en optique intégrée s'étendant sensiblement longitudinalement dans une partie centrale, des premières rainures longitudinales, sensiblement alignées avec les différents guides d'ondes individuels, dans chacune des deux parties latérales de part et d'autre de la partie centrale, pour recevoir des fibres optiques à raccorder aux guides d'ondes, et deux premières rainures transversales adjacentes aux guides d'ondes d'un côté et de l'autre, respectivement de ladite partie centrale, en définissant de chaque côté, par leur paroi latérale adjacente à la partie centrale, une interface de raccordement avec ladite partie centrale, caractérisé en ce que ledit substrat en verre comporte, en outre :
- deux deuxièmes rainures transversales, parallèles auxdites premières rainures transversales et adjacentes auxdites premières rainures longitudinales des deux parties latérales respectivement, qui y sont débouchantes,
- et une nervure, entre la première et la deuxième rainure transversale de chaque côté de la partie centrale, présentant chacune une hauteur sensiblement moindre que celle de la partie centrale sur le fond de la première rainure transversale, pour le maintien d'une portion d'extrémité de chaque fibre positionnée sur sa face terminale contre l'interface de raccordement située du côté correspondant.

Selon une autre caractéristique, le substrat comporte en outre des deuxièmes rainures longitudinales, chacune alignée avec l'une des premières rainures longitudinales qu'elle prolonge jusqu'au bord du substrat et de section transversale supérieure à celle de cette première rainure longitudinale.

Elle a également pour objet un procédé de fabrication de ce composant d'optique intégrée caractérisé en ce qu'il consiste à créer successivement, dans l'une des faces d'un substrat de verre à faces initialement planes:
- lesdits guides d'ondes, dans ladite partie centrale et au moins légèrement au delà de part et d'autre d'elle, et des repères, alignés avec les guides individuels, sensiblement sur les deux bords du substrat de part et d'autre de la partie centrale, les guides et les repères étant en optique intégrée et obtenus dans une première étape,
- les premières rainures longitudinales, par usinage, avec les portions terminales des guides d'ondes et lesdits repères obtenus à l'issue de la première étape servant de guidage au tracé des premières rainures longitudinales chacune réalisée, respectivement, sur une partie terminale de l'un des guides d'ondes, sur le repère correspondant et entre ce guide et ce repère, dans une deuxième étape,
- les premières et deuxièmes rainures transversales, par usinage, en supprimant des interfaces d'usinage entre les premières rainures longitudinales et les guides d'ondes, dans une troisième étape, et
- les nervures, par usinage, en les rectifiant en hauteur, dans une quatrième étape.

Les caractéristiques et les avantages de la présente invention apparaîtront clairement au cours de la description faite ci-après d'un exemple de réalisation illustré dans les dessins ci-annexés. Dans ce dessin :
- la figure 1 représente un composant d'optique intégrée selon la présente invention,
- les figures 2 et 3 illustrent le composant précité à l'issue de deux étapes successives du procédé de fabrication selon l'invention,
- la figure 4 correspond à une variante de l'étape illustrée dans la figure 2,
- la figure 5 montre le composant d'optique intégrée de la figure 1 sur lequel ont été montées des fibres optiques.

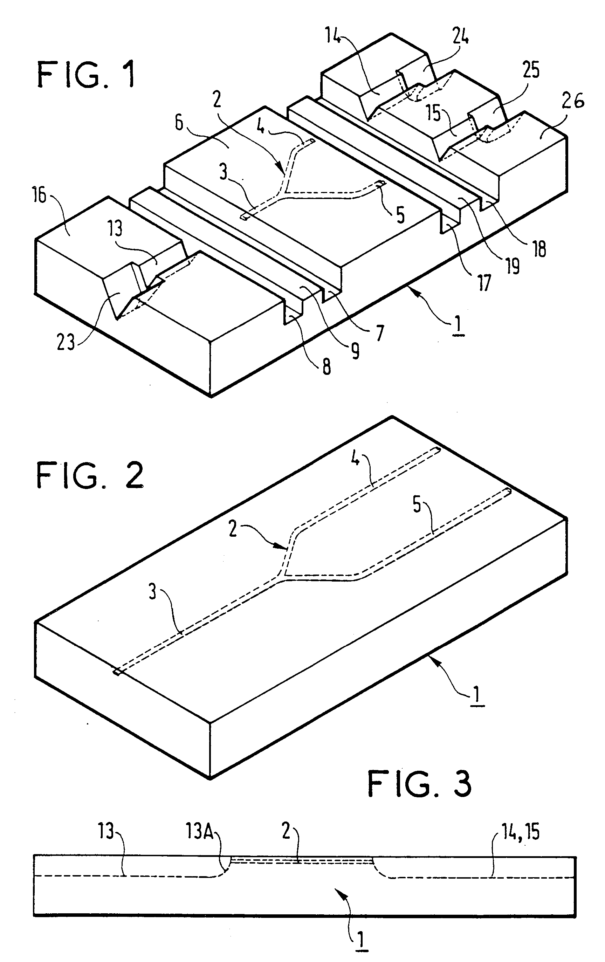

Dans la figure 1, on a représenté un substrat en verre 1 de forme parallélépipédique, sur l'une des surfaces duquel sont réalisées les différentes parties constitutives du composant d'optique intégrée selon la présente invention. Ce substrat présente dans sa partie centrale des guides d'ondes 2 réalisés en optique intégrée. Ces guides d'ondes constituent dans l'exemple illustré un coupleur en Y, à branche commune 3 à laquelle sont réunies ensemble deux autres branches 4 et 5. Cette partie centrale du substrat est désignée par la référence 6.

Ce substrat présente aussi, sur sa partie latérale du côté de la branche commune 3, une première et une deuxième rainure transversale 7 et 8 parallèles l'une à l'autre et transversales à la branche 3 et avec une nervure 9 entre elles.

Ces deux rainures 7 et 8 sont étroites et de section rectangulaire. La rainure 7, la plus proche de la branche 3, a son bord vertical, opposé à la nervure, sur lequel aboutit l'extrémité de la branche commune 3, et qui définit une interface de raccordement d'une fibre à la branche 3.

La nervure 9 est de hauteur définie, rendue légèrement moindre que celle de la partie centrale 6 sur le fond des rainures 7 et 8, pour soutenir la fibre à raccorder à la branche 3 quand elle est mise en regard de cette branche.

Ce substrat présente, en outre, au delà des deux rainures transversales 7 et 8, une première rainure longitudinale 13, alignée avec l'extrémité de la branche 3 et débouchant dans la rainure transversale 8, et une deuxième rainure longitudinale 23 prolongeant la rainure 13 et plus large qu'elle qui débouche sur le petit côté du substrat. La partie latérale terminale portant ces deux rainures longitudinales est désignée par la référence 16 ; elle est à niveau avec la partie centrale 6.

Ce même substrat 1 présente sur son autre partie latérale du côté des branches 4 et 5, deux rainures transversales 17 et 18, avec entre elles une nervure 19, qui sont tout à fait analogues aux rainures 7 et 8 et à la nervure 9 entre elles. Le bord de la rainure 17, autre que celui appartenant à la nervure 19, définit un épaulement d'interface de raccordement de deux fibres aux branches 4 et 5. La nervure 19 quant à elle soutient verticalement ces deux fibres, comme prévu pour la nervure 9.

Il présente en outre au-delà des deux rainures transversales 17 et 18, sur sa partie latérale terminale désignée par 26, deux rainures longitudinales 14 et 15, alignées avec les extrémités des deux branches 4 et 5 respectivement, et débouchant dans la rainure transversale 18, et deux deuxièmes rainures longitudinales 24 et 25. Les rainures 24 et 25 prolongent les rainures 14 et 15, respectivement ; elles sont plus larges qu'elles et sont débouchantes en bout du substrat.

Les rainures 13, 14, 15 et 23, 24, 25 sont des rainures en Vé ; étant toutes issues d'usinage, elles peuvent avoir une autre forme donnée par l'outil d'usinage.

Les rainures transversales 7, 8, 17 et 18 sont en U ou rectangulaires.

Le procédé de réalisation selon l'invention est décrit en se référant aux figures 2 et 3 qui illustrent deux étapes préliminaires de traitement pour l'obtention du composant d'optique intégrée de la figure 1. Dans ces figures 2 et 3 on a utilisé les références de la figure 1 pour désigner les éléments correspondants, même s'ils ne sont pas à l'issue de l'étape considérée à l'identique dans le composant final de la figure 1.

La figure 2 illustre l'étape de création des guides d'ondes 2 sur le substrat 1 selon la technique d'optique intégrée, en utilisant par exemple un procédé de photogravure. On y a repéré, les guides ou branches individuelles 3, 4 et 5 du coupleur en Y considéré. Le substrat est initialement à surface supérieure quasi-parfaitement plate. Les guides 2, 3 et 4 y sont créés, légèrement en profondeur sur toute la longueur de la surface supérieure exempte de toute rainure à l'issue de cette étape.

La figure 3 illustre l'étape de formation de rainures longitudinales à l'issue de l'étape de la figure 2 ; elle représente en coupe le substrat 1 avec ses guides d'ondes 2 et dans lequel ont été usinées les rainures longitudinales les plus étroites, qui sont la rainure 13 et les rainures 14 et 15. Ces rainures sont formées, sur une longueur fixée, directement sur les guides d'ondes déjà créés. Chacune de ces rainures va jusqu'au bord correspondant du substrat. Pour cette étape, les portions terminales des guides obtenus à l'issue de l'étape de la figure 1 sont donc directement utilisées comme repères de guidage de l'outil d'usinage. Ces rainures suppriment les portions de guides sur lesquelles elles sont tracées et sont en parfait alignement avec les nouvelles parties terminales restantes des guides.

Ainsi que visible dans cette figure 3, les rainures ainsi réalisées s'étendent vers la partie médiane du substrat, légèrement au delà de la partie latérale terminale 16 ou 26 du composant fini de la figure 1. Elles présentent chacune à l'issue de cette étape un arrondi d'interface, tel que 13A pour la rainure 13 avec celui des guides d'ondes 2 correspondant, dû à l'outil d'usinage.

La figure 1 déjà décrite correspond à l'étape finale de réalisation du composant. Cette étape finale consiste à usiner sur le substrat, à l'issue de l'étape de la figure 3 :
- les rainures transversales 8 et 18, dans lesquelles les rainures longitudinales 13 et 14 et 15 sont directement débouchantes,
- les rainures transversales 7 et 17, qui sont parallèles aux rainures 8 et 18, qui suppriment les arrondis d'interface avec les guides, tels que 13A, et qui font apparaître les nervures 9 et 19 et les interfaces de raccordement des fibres avec les guides d'ondes restants sur la seule partie centrale 6 du substrat,
- la face supérieure de chacune des nervures 9 et 19, qui est ainsi rectifiée ou tronquée en hauteur par rapport au niveau initial correspondant à celui de la partie centrale 6, pour le maintien vertical de la fibre à raccorder à chaque guide d'ondes, et
- les rainures 23, 24 et 25 à chaque extrémité du substrat, sur les extrémités des rainures étroites réalisées à l'issue de l'étape de la figure 3, l'usinage de ces rainures 23, 24 et 25 laissent subsister des arrondis d'interface avec les rainures étroites 13, 14 et 15, non référencés et non préjudiciables.

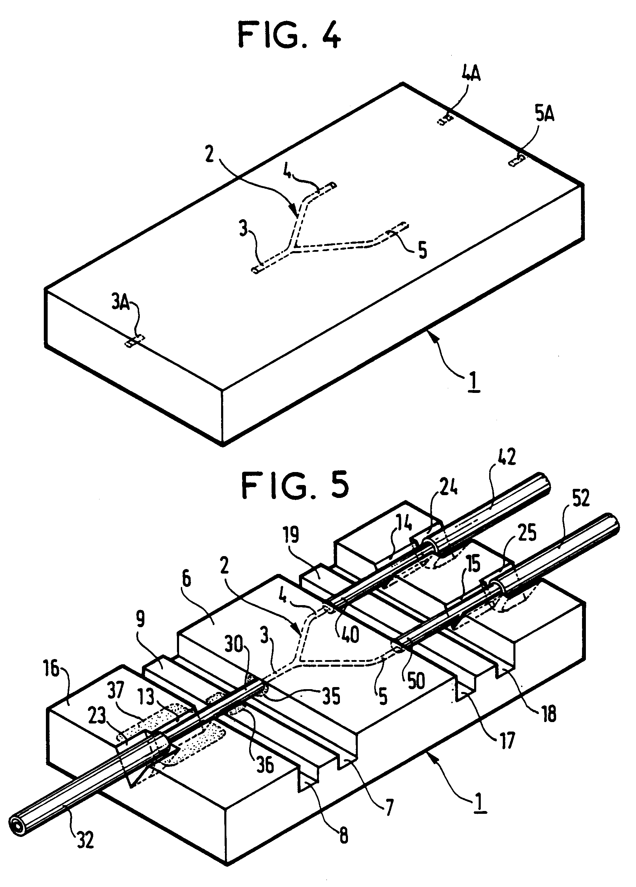

Dans le procédé de fabrication du composant d'optique intégrée, la figure 4 correspond à une variante de l'étape donnée dans la figure 2. Dans cette variante, les guides d'ondes 1 sont réalisés dans la partie centrale du substrat 1, en débordant légèrement de part et d'autre d'elles. De simples repères notés 3A, 4A et 5A sont réalisés en même temps que les guides d'ondes et par le même procédé d'optique intégrée, dans le prolongement des guides individuels 3, 4, 5 au voisinage des bords du substrat. Dans ces conditions, ce sont ces repères et les extrémités des guides d'ondes qui servent de guidage au tracé des rainures selon l'étape de la figure 3.

Dans la figure 5, on a représenté le composant d'optique intégrée de la figure 1 sur lequel une fibre optique 30 est raccordée au guide d'ondes 3 et, pareillement des fibres 40 et 50 aux guides 4 et 5 et sont toutes scellées au substrat. Ces fibres optiques sont chacune recouverte d'un revêtement en résine 32 ou 42 ou 52. Pour la connexion des fibres optiques aux guides d'ondes, l'extrémité de chacune est préparée, en enlevant le revêtement comme représenté et précisé ci-après en regard du montage des fibres dans les rainures longitudinales. Ensuite, chaque fibre est placée sur le substrat dans ses rainures longitudinales et est positionnée sensiblement en contact avec l'extrémité du guide d'ondes correspondant, contre l'épaulement d'interface de raccordement. A ce stade, pour la fibre 30 par exemple, la partie recouverte du revêtement 32 est dans la large rainure longitudinale 23, et sa partie terminale dénudée 30 s'étend dans la rainure longitudinale 13, vient en appui sur la nervure 9, et vient au dessus de la rainure transversale 7 en bout du guide d'ondes 3.

Une micromanipulation des fibres, à partir de leurs portions extérieures au substrat 1 et recouvertes du revêtement, ajuste le positionnement final des fibres en parfait alignement avec les guides individuels et les maintient ainsi jusqu'à la fin de leur scellement sur le substrat ainsi obtenu avec une grande précision.

Ce scellement est assuré de préférence par collage, à l'aide d'une colle durcissable aux rayons ultra-violets par exemple. Les zones de scellement ont été représentées et identifiées sur cette figure 5, pour la seule fibre 30. Ce sont :
- les bouts des fibres dénudées face aux guides, soit la zone 35 pour la fibre 30,
- les fibres dénudées sur les nervures, soit la zone 36 pour la fibre 30 sur la nervure 9,
- les fibres et les revêtements des fibres dans les différentes rainures longitudinales, soit la zone 37 pour la fibre dénudée 30 dans la rainure longitudinale 13 et son revêtement 32 dans la rainure 23.

Ce scellement des fibres, avec pour chacune le revêtement et la fibre dénudée solidaires du substrat en verre, donne une forte tenue en traction et une excellente tenue avec des variations de conditions environnantes.

L'invention a été décrite en regard du mode de réalisation illustré dans les dessins. Il est bien entendu évident que l'on peut y apporter des modifications de détail sans pour autant sortir du cadre de cette invention. En particulier, les fibres peuvent ne pas être dénudées au niveau des nervures de maintien et être ainsi scellées aux nervures.

## Revendications

1. Composant d'optique intégrée présentant un substrat longitudinal en verre comportant des guides d'ondes en optique intégrée s'étendant sensiblement longitudinalement dans une partie centrale, des premières rainures longitudinales, sensiblement alignées avec les différents guides d'ondes individuels, dans chacune des deux parties latérales de part et d'autre de la partie centrale, pour recevoir des fibres optiques à raccorder aux guides d'ondes, et deux premières rainures transversales adjacentes aux guides d'ondes d'un côté et de l'autre, respectivement, de ladite partie centrale, en définissant de chaque côté par leur paroi latérale adjacente à la partie centrale, une interface de raccordement avec ladite partie centrale, caractérisé en ce que ledit substrat en verre (1) comporte, en outre :
- deux deuxièmes rainures transversales (8, 18), parallèles auxdites premières rainures transversales (7, 17) et adjacentes auxdites premières rainures longitudinales (13, 14, 15) des deux parties latérales respectivement, qui y sont débouchantes,
- et une nervure (9, 19), entre la première et la deuxième rainure transversale de chaque côté de la partie centrale, présentant chacune une hauteur sensiblement moindre que celle de la partie centrale sur le fond de la première rainure transversale, pour le maintien d'une portion d'extrémité de chaque fibre positionnée par sa face terminale contre l'interface de raccordement située du côté correspondant.

2. Composant d'optique intégrée selon la revendication 1, caractérisé en ce que ledit substrat en verre (1) comporte, en outre, des deuxièmes rainures longitudinales (23, 24, 25), chacune alignée avec l'une des premières rainures longitudinales (13, 14, 15) qu'elle prolonge jusqu'au bord du substrat et de section transversale supérieure à celle de cette première rainure longitudinale.

3. Composant d'optique intégrée selon la revendication 2, caractérisé en ce que les sections respectives desdites premières et deuxièmes rainures longitudinales (13, 14, 15 ; 23, 24,25) correspondent respectivement aux dimensions des fibres dénudées (30, 40, 50) et à celles de leur revêtement (32) qu'elles doivent recevoir, avec la section des premières rainures longitudinales définie par les dimensions de chaque fibre dénudée (30) et celle des deuxièmes rainures longitudinales par les dimensions du revêtement (32).

4. Composant d'optique intégrée selon la revendication 3, caractérisé en ce que lesdites rainures longitudinales (13, 23 ; 14, 24 ; 15, 25) et lesdites rainures transversales (7, 8, 17, 18) sont issues d'usinage et de section définie par leur outil d'usinage.

5. Procédé de fabrication du composant d'optique intégrée selon l'une des revendications 1 à 4, caractérisé en ce qu'il consiste à créer successivement, dans l'une des faces d'un substrat longitudinal en verre (1) à faces initialement planes:
- lesdits guides d'ondes (1), dans ladite partie centrale (6) et au moins légèrement au delà, de part et d'autre d'elle, et des repères (3A, 4A, 5B) alignés avec les guides individuels (3, 4, 5) et positionnés sensiblement sur les deux bords du substrat, de part et d'autre de la partie centrale, les guides et les repères étant en optique intégrée, et obtenus dans une première étape,
- les premières rainures longitudinales (13, 14, 15), par usinage, avec les portions terminales des guides d'ondes et lesdits repères obtenus à l'issue de la première étape servant de guidage au tracé des premières rainures longitudinales chacune réalisée, respectivement, sur une partie terminale de l'un des guides d'ondes, sur le repère correspondant et entre ce guide et ce repère, dans une deuxième étape,
- les premières et deuxièmes rainures transversales, par usinage, en supprimant des interfaces (3A) d'usinage entre les premières rainures longitudinales et les guides d'ondes, dans une troisième étape, et
- les nervures, par usinage, en les rectifiant en hauteur, dans une quatrième étape.

6. Procédé selon la revendication 5, caractérisé en ce qu'il consiste dans ladite première étape à créer lesdits guides avec les parties terminales de ces guides englobant les repères correspondants.

7. Procédé selon l'une des revendications 5 et 6, caractérisé en ce qu'il consiste en outre, à usiner les deuxièmes rainures longitudinales chacune réalisées débouchantes sur le bord du substrat et sur l'extrémité en regard de la première rainure longitudinale correspondante.

## Patentansprüche

1. Bauteil aus dem Bereich integrierter Optik, mit einem länglichen Substrat aus Glas, das Lichtleiter in integrierter Optik, die sich im wesentlichen in Längsrichtung in einem zentralen Bereich erstrecken, erste Längsnuten, die im wesentlichen mit je einem der verschiedenen Lichtleiter fluchten, in jedem der Seitenbereiche zu beiden Seiten des zentralen Bereichs zur Aufnahme der an die Lichtleiter anzuschließenden Lichtleitfasern und zwei erste Quernuten enthält, die den Lichtleitern zu beiden Seiten des zentralen Bereichs benachbart sind und auf jeder Seite mit ihrer dem zentralen Bereich benachbarten Seitenwand eine Anschlußschnittstelle zum zentralen Bereich bilden, dadurch gekennzeichnet, daß das Glassubstrat außerdem aufweist:
- zwei zweite Quernuten (8, 18), parallel zu den ersten Quernuten (7, 17) und den ersten Längsnuten (13, 14, 15) der beiden Seitenbereiche benachbart, die hier münden,
- und eine Rippe (9, 19) zwischen der ersten und der zweiten Quernut auf jeder Seite des zentralen Bereichs, die je eine wesentlich geringere Höhe als die des zentralen Bereichs am Boden der ersten Quernut für den Halt eines Endabschnitts jeder Faser aufweist, die mit ihrer Endfläche gegen die auf der entsprechenden Seite angeordnete Anschlußschnittstelle positioniert ist.

2. Bauteil aus dem Bereich integrierter Optik nach Anspruch 1, dadurch gekennzeichnet, daß das Glassubstrat (1) außerdem zweite Längsnuten (23, 24, 25) aufweist, die je mit einer der ersten Längsnuten (13, 14, 15) fluchten, die sie bis zum Rand des Substrats verlängern und die einen größeren Querschnitt als diese ersten Längsnuten aufweisen.

3. Bauteil aus dem Bereich integrierter Optik nach Anspruch 2, dadurch gekennzeichnet, daß die Querschnitte der ersten bzw. zweiten Längsnuten (13, 14, 15; 23, 24, 25) den Maßen der freigelegten Fasern (30, 40 50) bzw. denen ihrer Umhüllung (32) entsprechen, die sie aufnehmen sollen, wobei der Querschnitt der ersten Längsnuten durch die Maße jeder freigelegten Faser (30) und der der zweiten Längsnuten durch die Maße der Umhüllung (32) definiert ist.

4. Bauteil aus dem Bereich integrierter Optik nach Anspruch 3, dadurch gekennzeichnet, daß die Längsnuten (13, 23; 14, 24; 15, 25) und die Quernuten (7, 8, 17, 18) spanend hergestellt sind und ihr Querschnitt von dem sie bearbeitenden Werkzeug bestimmt wird.

5. Verfahren zur Herstellung dieses Bauteils aus dem Bereich der integrierten Optik nach einem der Ansprüche 1 bis 4, dadurch gekennzeichnet, daß es darin besteht, nacheinander in einer der ursprünglich ebenen Flächen eines Glassubstrats zu erzeugen:
- in einem ersten Verfahrensschritt die Lichtleiter (1) im zentralen Bereich (6) und zumindest geringfügig zu beiden Seiten über diesen hinaus, und Markierungen (3A, 4A, 5A) in Flucht mit den einzelnen Lichtleitern (3, 4, 5) im wesentlichen auf den beiden Rändern des Substrats zu beiden Seiten des zentralen Bereichs, wobei die Lichtleiter und die Markierungen in integrierter Optik hergestellt werden,
- die ersten Längsnuten (13, 14, 15) in einem zweiten Verfahrensschritt durch spanende Bearbeitung, wobei die am Ende des ersten Verfahrensschritts erhaltenen Endabschnitte der Lichtleiter und die Markierungen als Führung für den Verlauf der ersten Längsnuten dienen, die je auf einem Endbereich eines der Lichtleiter, auf der entsprechenden Markierung und zwischen diesem Lichtleiter und dieser Markierung hergestellt werden,
- in einem dritten Verfahrensschritt die ersten und zweiten Quernuten, und zwar durch spanende Bearbeitung, indem Fräsübergänge (3A) zwischen den ersten Längsnuten und den Lichtleitern entfernt werden, und
- in einem vierten Verfahrensschritt die Rippen, durch spanende Verringerung ihrer Höhe.

6. Verfahren nach Anspruch 5, dadurch gekennzeichnet, daß der erste Schritt darin besteht, die Lichtleiter zu erzeugen, wobei die Endbereiche dieser Lichtleiter Markierungen bilden.

7. Verfahren nach einem der Ansprüche 5 und 6, dadurch gekennzeichnet, daß es weiter darin besteht, die zweiten Längsnuten so auszuschneiden, daß sie am Rand des Substrats und in die entsprechende erste Längsnut münden.

## Claims

1. An integrated optical component having a longitudinal glass substrate with integrated optical waveguides extending substantially longitudinally in a central portion thereof, first longitudinal grooves substantially in alignment with the various individual waveguides in each of two end portions at opposite ends of the central portion to receive optical fibers to be connected to the waveguides, and two transverse grooves adjacent to the waveguides at respective ends of said central portion, defining on each end of the central portion, by their end walls adjacent to the central portion, an interface for connection therewith, the component being characterized in that said glass substrate (1) further includes:
two transverse grooves (8, 18) parallel to said first transverse grooves (7, 17) and adjacent to said first longitudinal grooves (13, 14, 15) in respective ones of the two end portions, which longitudinal grooves open out therein; and
a rib (9, 19) between the first and second transverse grooves at each end of the central portion, the height of each rib above the bottom of the first transverse grooves being substantially less than the height of the central portion thereabove, for the purpose of supporting a portion of the end of each optical fiber positioned with its end face against the connection interface situated at its corresponding end.

2. An integrated optical component according to claim 1, characterized in that the glass substrate (1) further includes second longitudinal grooves (23, 24, 25) each in alignment with the corresponding one of the first longitudinal grooves (13, 14, 15) which it extends to the end of the substrate, with the transverse section of the second longitudinal grooves being greater than the section of the first longitudinal grooves.

3. An integrated optical component according to claim 2, characterized in that the respective sections of said first and second longitudinal grooves (13, 14, 15; 23, 24, 25) correspond respectively to the dimensions of the stripped fibers (30, 40, 50) and to those of the covered fibers (32) that they are to receive, with the section of the first longitudinal grooves being defined by the dimensions of each stripped fiber (30) and with the section of the second longitudinal grooves being defined by the dimensions of the covered fibers (32).

4. An integrated optical component according to claim 3, characterized in that said longitudinal grooves (13, 23; 14, 24; 15, 25) and said transverse grooves (7, 8, 17, 18) are obtained by machining with their sections being defined by the machining tool used therefor.

5. A method of manufacturing an integrated optical component according to any one of claims 1 to 4, characterized in that it consists in performing the following operations successively in a corresponding one of the faces of a longitudinal glass substrate (1) having faces that are initially plane:
in a first stage, forming said waveguides (2) in said central portion (6) and at least a little therebeyond on either side thereof, and forming marks (3A, 4A, 5B) in alignment with the individual waveguides (3, 4, 5) and positioned substantially on the two ends of the substrate at opposite ends of the central portion, the waveguides and the marks being formed using integrated optical techniques;
in a second stage, machining first longitudinal grooves (13, 14, 15) with the terminal portions of the waveguides and said marks obtained in the first stage serving as guides for the lines followed by the first longitudinal grooves, each of which is formed on a respective end portion of one of the waveguides, on the corresponding mark, and between said waveguide and said mark;
in a third stage, machining first and second transverse grooves, eliminating the machining interfaces (3A) between the first longitudinal grooves and the waveguides; and
in a fourth stage, machining the ribs to rectify them in height.

6. A method according to claim 5, characterized in that it consists during said first stage in creating said waveguides with the terminal portions thereof including the corresponding marks.

7. A method according to claim 5 or 6, characterized in that it further consists in machining second longitudinal grooves, each second longitudinal groove opening out to one of the ends of the substrate and to the facing end of the corresponding first longitudinal groove.
